(19) Europäisches Patentamt
European Patent Office
Office européen des brevets

(11) **EP 4 600 013 A1**

(12) **EUROPÄISCHE PATENTANMELDUNG**

(43) Veröffentlichungstag:
**13.08.2025 Patentblatt 2025/33**

(21) Anmeldenummer: **25151798.3**

(22) Anmeldetag: **14.01.2025**

(51) Internationale Patentklassifikation (IPC):
***B29C 45/00*** *(2006.01)* ***B29C 45/76*** *(2006.01)*
***B29C 45/77*** *(2006.01)*

(52) Gemeinsame Patentklassifikation (CPC):
**B29C 45/7646; B29C 45/0025; B29C 45/77;**
B29C 2945/7601; B29C 2945/76257;
B29C 2945/76381; B29C 2945/76538;
B29C 2945/76541

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **07.02.2024 EP 24156244**

(71) Anmelder: **Kistler Holding AG**
**8408 Winterthur (CH)**

(72) Erfinder: **Vaculik, Robert**
**78465 Konstanz (DE)**

# (54) VERFAHREN UND VORRICHTUNG ZUR ERMITTLUNG EINER VISKOSITÄTSKENNZAHL EINER SCHMELZE IN EINEM SPRITZGIESSWERKZEUG

(57) Die Erfindung betrifft ein Verfahren zur Ermittlung einer Viskositätskennzahl ($K_\eta$) einer Schmelze (M) in einem Spritzgiesswerkzeug (11); welches mindestens eine Kavität (11.1) aufweist, in welche die Schmelze (M) eingespritzt wird und die Kavität (11.1) füllt; mit einer Drucksensoreinheit (13), welche an der Kavität (11.1) angeordnet ist und einen Werkzeuginnendruck (P) der Schmelze (M) in der Kavität (11.1) misst und für den gemessenen Werkzeuginnendruck (P) Sensordaten ($XD(t_i)$) erzeugt; und mit mindestens einer Auswerteeinheit (14), welche eingerichtet ist, die Sensordaten ($XD(t_i)$) auszuwerten; welche Auswertung dadurch gekennzeichnet ist, dass ein Startzeitpunkt ($t_I$) ermittelt wird, an dem das Vorzeichen einer ersten Ableitungsfunktion ($XD'(t_I)$) der Sensordaten ($XD(t_i)$) von null (= 0) auf positiv (> 0) wechselt; dass ein Füllzeitpunkt ($t_{II}$) ermittelt wird, an dem das Vorzeichen einer zweiten Ableitungsfunktion ($XD''(t_{II})$) der Sensordaten ($XD(t_i)$) von null (= 0) auf positiv (> 0) wechselt; dass ein Druckanstieg ($\Delta P$) zwischen dem Werkzeuginnendruck ($P_{II}$) zum Füllzeitpunkt ($t_{II}$) und dem Werkzeuginnendruck ($P_{ini}$) zum Startzeitpunkt ($t_I$) gebildet wird; und dass die Viskositätskennzahl ($K_\eta$) aus dem Druckanstieg ($\Delta P$) und einer Zeitdifferenz ($\Delta t$) zwischen dem Füllzeitpunkt ($t_{II}$) und dem Startzeitpunkt ($t_I$) gebildet wird.

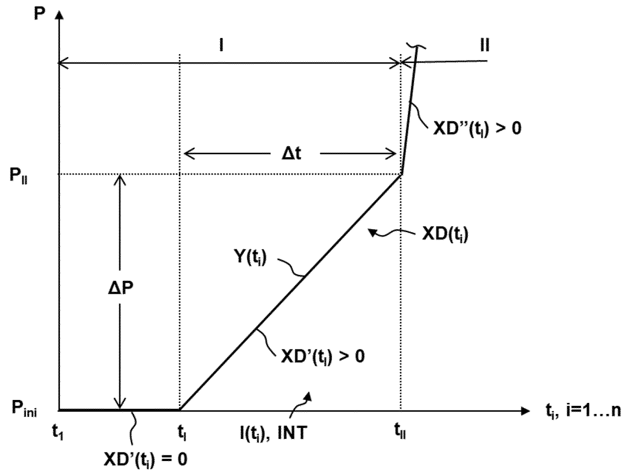


Fig. 3



EP 4 600 013 A1

## Beschreibung

### Technisches Gebiet

Die Erfindung betrifft ein Verfahren und eine Vorrichtung zur Ermittlung einer Viskositätskennzahl einer Schmelze in einem Spritzgiesswerkzeug nach den Oberbegriffen der unabhängigen Ansprüche.

### Stand der Technik

Spritzgiessen ist ein zyklischer Prozess, bei dem eine Spritzgiessmaschine in sich zeitlich wiederholenden Zyklen mindestens ein Stückgut herstellt. Jeder Zyklus weist mehrere Phasen auf. Die Spritzgiessmaschine weist ein Spritzgiesswerkzeug mit einer Kavität auf. In einer Einspritzphase wird ein Werkstoff als Schmelze in die Kavität eingespritzt. Im Vergleich zum Werkstoff ist die Schmelze in der Kavität heisser. Die Schmelze fliesst entlang eines Fliessweges und füllt die Kavität. Es erfolgt ein Druckanstieg. Die Schmelze nimmt die Form der Kavität an. In einer Nachdruckphase wird die Schmelze in der Kavität komprimiert und weitere Schmelze wird eingefüllt, um eine Volumenkontraktion weitestgehend zu kompensieren. In einer Abkühlphase kühlt die Schmelze in der Kavität ab. Die abgekühlte Schmelze bildet das Stückgut. Abschliessend wird das Stückgut der Kavität entnommen.

Zur Gewährleistung einer gleichbleibend hohen Qualität der hergestellten Stückgüter ist es wichtig, dass sich die Prozessparameter beim Spritzgiessen von Zyklus zu Zyklus nicht ändern. Solch ein Prozessparameter ist die Viskosität der Schmelze. Die Viskosität gibt den Widerstand an, den die Schmelze beim Fliessen entlang des Fliessweges überwinden muss. Nimmt die Viskosität zu, beispielsweise durch Schwankungen bei den Eigenschaften des Werkstoffes oder eine Änderung der Feuchtigkeit des Werkstoffes, so entsteht ein höherer Widerstand beim Füllen der Kavität. Dies kann zu einem unvollständigen Füllen der Kavität mit Schmelze führen, was zu einem Stückgut mit fehlerhafter Formteilbildung führen kann und was unerwünscht ist.

Die Viskosität kann als Proportionalitätsfaktor zwischen Schubspannung und Schergeschwindigkeit dargestellt werden. Während des Füllens ist die Schubspannung proportional zum Druck der Schmelze an einer bestimmten Stelle des Fliessweges. Die Schergeschwindigkeit ist proportional zur Fliessgeschwindigkeit der Schmelze in der Kavität. Bei bekannter Geometrie des Fliessweges lässt sich somit aus dem Druckanstieg und der Fliessgeschwindigkeit eine Viskositätskennzahl ermitteln, welche proportional zur tatsächlichen in der Kavität herrschenden Viskosität der Schmelze ist.

Hierzu offenbart die Schrift WO2009040077A1 ein Verfahren zur Ermittlung der Viskositätskennzahl einer Schmelze in einem Spritzgiesswerkzeug. In der Kavität sind ein Drucksensor und ein Temperatursensor angeordnet. Der Drucksensor befindet sich in der Nähe des Schmelzeeintritts in die Kavität, der Temperatursensor am Ende des Fliessweges der Kavität. Beim Füllen der Kavität mit Schmelze misst der Drucksensor den Werkzeuginnendruck und der Temperatursensor misst die Temperatur an der Kavitätswand. Aus dem Druckanstieg zwischen dem Werkzeuginnendruck der leeren Kavität und demjenigen zum Zeitpunkt, an dem die Schmelze den Temperatursensor erreicht und dieser ein Temperatursignal erzeugt, welches anzeigt, dass die Kavität bis zur Position des Temperatursensors mit Schmelze gefüllt ist, wird die Schubspannung ermittelt. Aus der zeitlichen Differenz zwischen dem Zeitpunkt, an dem der Drucksensor den Beginn eines Anstieges des Werkzeuginnendruckes misst und dem Zeitpunkt, an dem der Temperatursensor den Beginn eines Temperaturanstieges am Ende des Fliessweges misst, wird die Fliessgeschwindigkeit ermittelt. Die Viskositätskennzahl ergibt sich dann aus dem Quotienten von Schubspannung und Fliessgeschwindigkeit.

Eine erste Aufgabe der vorliegenden Erfindung ist es, das aus der Schrift WO2009040077A1 bekannte Verfahren zur Ermittlung der Viskositätskennzahl einer Schmelze in einem Spritzgiesswerkzeug zu verbessern. Auch stellt sich die Erfindung die weitere Aufgabe, eine Vorrichtung bereitzustellen, welche eine kostengünstige Ermittlung der Viskositätskennzahl einer Schmelze in einem Spritzgiesswerkzeug ermöglicht.

### Darstellung der Erfindung

Zumindest eine dieser Aufgaben wird durch die Merkmale der unabhängigen Ansprüche gelöst.

Die Erfindung betrifft ein Verfahren zur Ermittlung einer Viskositätskennzahl einer Schmelze in einem Spritzgiesswerkzeug; welches mindestens eine Kavität aufweist, in welche die Schmelze eingespritzt wird und die Kavität füllt; mit einer Drucksensoreinheit, welche an der Kavität angeordnet ist und einen Werkzeuginnendruck der Schmelze in der Kavität misst und für den gemessenen Werkzeuginnendruck Sensordaten erzeugt; und mit mindestens einer Auswerteeinheit, welche eingerichtet ist, die Sensordaten auszuwerten; welche Auswertung durch die folgenden Schritte gekennzeichnet ist:

- dass ein Startzeitpunkt ermittelt wird, an dem das Vorzeichen einer ersten Ableitungsfunktion der Sensordaten von null auf positiv wechselt;
- dass ein Füllzeitpunkt ermittelt wird, an dem das Vorzeichen einer zweiten Ableitungsfunktion der Sensordaten von null auf positiv wechselt;
- dass ein Druckanstieg zwischen dem Werkzeuginnendruck zum Füllzeitpunkt und dem Werkzeuginnendruck zum Startzeitpunkt gebildet wird; und
- dass die Viskositätskennzahl aus dem Druckanstieg

und einer Zeitdifferenz zwischen dem Füllzeitpunkt und dem Startzeitpunkt gebildet wird.

Die Erfindung betrifft auch eine Vorrichtung zur Ermittlung einer Viskositätskennzahl einer Schmelze in einem Spritzgiesswerkzeug, welche Vorrichtung neben dem Spritzgiesswerkzeug auch eine Drucksensoreinheit und mindestens eine Auswerteeinheit aufweist; welches Spritzgiesswerkzeug mindestens eine Kavität aufweist, in welche die Schmelze einspritzbar ist wird und welche Kavität mit eingespritzter Schmelze füllbar ist; welche Drucksensoreinheit an der Kavität angeordnet ist und einen Werkzeuginnendruck der eingespritzten Schmelze in der Kavität misst und für den gemessenen Werkzeuginnendruck Sensordaten erzeugt; welche Auswerteeinheit eingerichtet ist, die Sensordaten auszuwerten; welche Auswertung dadurch gekennzeichnet ist:

- dass die Auswerteeinheit einen Startzeitpunkt ermittelt, an dem das Vorzeichen einer ersten Ableitungsfunktion der Sensordaten von null auf positiv wechselt;
- dass die Auswerteeinheit einen Füllzeitpunkt ermittelt, an dem das Vorzeichen einer zweiten Ableitungsfunktion der Sensordaten von null auf positiv wechselt;
- dass die Auswerteeinheit einen Druckanstieg zwischen dem Werkzeuginnendruck zum Füllzeitpunkt und dem Werkzeuginnendruck zum Startzeitpunkt bildet; und
- dass die Auswerteeinheit die Viskositätskennzahl aus dem Druckanstieg und Zeitdifferenz zwischen dem Füllzeitpunkt und dem Startzeitpunkt bildet.

Die Anmelderin hat überraschenderweise herausgefunden, dass sich die Viskositätskennzahl einer Schmelze in einer Kavität im Unterschied zur Lehre der Schrift WO2009040077A1 mit nur einer Drucksensoreinheit und ohne Verwendung eines Temperatursensors ermitteln lässt. Dadurch wird die Ermittlung der Viskositätskennzahl kostengünstig.

Die Erfindung beruht auf der Erkenntnis, dass das Fliessverhalten der Schmelze in der Kavität dem Gesetz von Hagen-Poiseuille genügt. Demnach ist der Druckanstieg der Schmelze beim Füllen der Kavität proportional zum Produkt aus Viskosität und Volumenstrom. Zum Füllzeitpunkt ist die Viskosität der Schmelze somit proportional zum Produkt aus Druckanstieg und Zeitdifferenz auf dem Fliessweg. Daher lässt sich die Viskositätskennzahl einfach und rasch ermitteln.

Weitere Ausbildungen des Erfindungsgegenstandes werden in den abhängigen Ansprüchen beansprucht.

**Kurze Beschreibung der Zeichnungen**

Im Folgenden wird die Erfindung beispielhaft unter Beizug der Figuren näher erklärt. Es zeigen

Fig. 1 schematisch einen Teil einer Vorrichtung V mit einer Spritzgiessmaschine 1 zur Herstellung von Stückgütern W;

Fig. 2 eine graphische Darstellung von Sensordaten $XD(t_i, i=1...n)$ bei der Herstellung eines Stückgutes W auf der Spritzgiessmaschine 1 gemäss Fig. 1; und

Fig. 3 einen vergrösserten Ausschnitt der graphischen Darstellung von Sensordaten $XD(t_i, i=1...n)$ gemäss Fig. 2.

Gleiche Bezugszeichen bezeichnen in den Figuren gleiche Gegenstände.

**Wege zur Ausführung der Erfindung**

Fig. 1 zeigt schematisch einen Teil einer Vorrichtung V zur Ermittlung der Viskosität $\eta$ einer Schmelze M in mindestens einem Spritzgiesswerkzeug 11.

Das Spritzgiesswerkzeug 11 ist Bestandteil einer handelsüblichen und dem Fachmann bekannten Spritzgiessmaschine 1 zur Herstellung von mindestens einem Stückgut W.

Das Spritzgiessen ist ein zyklischer Prozess, bei dem die Spritzgiessmaschine 1 in sich zeitlich wiederholenden Zyklen das Stückgut W herstellt. Jeder Zyklus weist eine Einspritzphase I, eine Nachdruckphase II und eine Abkühlphase III auf. Ein Zyklus kann mehrere Sekunden dauern.

Die Spritzgiessmaschine 1 weist als Bestandteil mindestens eine Einspritzvorrichtung 10 mit einer Schnecke 10.1 und einer Düse 10.2 auf. Mit der Schnecke 10.1 wird ein Werkstoff zu einer Schmelze M verflüssigt und gegen die Düse 10.2 bewegt. Die Schmelze M kann aus Kunststoff, Metall, Keramik usw. bestehen.

Das Spritzgiesswerkzeug 11 weist mindestens eine Kavität 11.1 auf. In der Einspritzphase I wird die Schmelze M durch die Düse 10.2 in die Kavität 11.1 eingespritzt. Im Vergleich zum Werkstoff ist die Schmelze in der Kavität 11.1 heisser. In der Kavität 11.1 fliesst die Schmelze M entlang eines Fliessweges und füllt die Kavität 11.1. Es erfolgt ein Druckanstieg. Die Schmelze M nimmt die Form der Kavität 11.1 an. In der Nachdruckphase II wird die Schmelze M in der Kavität 11.1 komprimiert und weitere Schmelze M wird eingefüllt, um eine Volumenkontraktion weitestgehend zu kompensieren. In der Abkühlphase III kühlt die Schmelze M in der Kavität 110 ab. Die abgekühlte Schmelze M bildet das Stückgut W. Abschliessend wird das Stückgut W der Kavität 11.1 entnommen.

Die Spritzgiessmaschine 1 weist als Bestandteil mindestens eine Steuereinheit 12 auf. Die Steuereinheit 12 ist eingerichtet, die Herstellung des Stückgutes W über mindestens eine der folgenden Maschineneinstellgrössen S zu steuern:

- eine Dosiergeschwindigkeit der Schnecke 10.1,
- eine Einspritzgeschwindigkeit der Schmelze M,
- eine Temperatur der Schmelze M,
- ein Füllzeitpunkt $t_{II}$.

Dazu ist die Steuereinheit 12 über Signalleitungen mit der Einspritzvorrichtung 10 und dem Spritzgiesswerkzeug 11 verbunden und steuert die Einspritzvorrichtung 10 und die Spritzgiesswerkzeug 11 über die Signalleitungen mit der Maschineneinstellgrösse S. Die Steuereinheit 12 erzeugt für die Maschineneinstellgrösse S Maschineneinstelldaten SD. Die Maschineneinstelldaten SD sind digitale Daten.

Das Spritzgiesswerkzeug 11 weist als Bestandteil pro Kavität 11.1 eine Drucksensoreinheit 13 auf. Die Drucksensoreinheit 13 ist an der Kavität 11.1 angeordnet. Die Drucksensoreinheit 13 ist eingerichtet, den Werkzeuginnendruck P der Schmelze M in der Kavität 11.1 zu messen. Die Drucksensoreinheit kann einen piezoelektrischen Drucksensor, einen piezoresistiven Drucksensor, ein Dehnungsmessstreifen, usw. aufweisen.

Vorzugsweise weist die Drucksensoreinheit 13 einen piezoelektrischen Drucksensor auf, welcher unter der Wirkung des Werkzeuginnendruckes P elektrische Polarisationsladungen erzeugt. Die Menge der erzeugten elektrischen Polarisationsladungen ist proportional zur Grösse des Werkzeuginnendruckes P. Der piezoelektrische Drucksensor misst den Werkzeuginnendruck P typischerweise mit einer Messgenauigkeit von 1 %. Auch misst der piezoelektrische Drucksensor den Werkzeuginnendruck P üblicherweise mit einer zeitlichen Auflösung von kleiner/gleich 0.01 Hz. Die Drucksensoreinheit 13 kann für den piezoelektrischen Drucksensor eine Verstärkereinheit aufweisen, welche die elektrischen Polarisationsladungen zu Sensordaten $XD(t_i)$ verstärkt. Der Sensordaten-Index i bezeichnet die einzelnen Sensordaten $XD(t_i)$ zu Zeitpunkten $t_i$, i=1...n und die Sensordaten-Zahl n bezeichnet die Anzahl der Sensordaten $XD(t_i)$. Die Sensordaten $XD(t_i)$ folgen sich zu den Zeitpunkten $t_i$, i=1...n zeitlich aufeinander und befinden sind vorzugsweise in einem konstanten zeitlichen Abstand zueinander. Vorzugsweise sind die Sensordaten $XD(t_i)$ digitale Daten. Für einen Zyklus mit einer typischen Zeitdauer t = 10 sec misst der piezoelektrische Drucksensor den Werkzeuginnendruck P somit mindestens 1000 Mal und erzeugt eine zeitliche Folge von mindestens 1000 Sensordaten $XD(t_i)$.

Die Vorrichtung V weist als Bestandteil mindestens eine Auswerteeinheit 14 auf. Die Auswerteeinheit 14 weist mindestens einen Datenprozessor 14.1, mindestens einen Datenspeicher 14.2, mindestens eine Ausgabeeinheit 14.3 und mindestens eine Eingabeeinheit 14.4 auf. Mindestens ein Computerprogramm CP ist im Datenspeicher 14.2 gespeichert und in den Datenprozessor 14.1 ladbar. Die Auswerteeinheit 14 ist über Signalleitungen mit der Steuereinheit 12 und mit der Drucksensoreinheit 13 verbunden. Über die Signalleitungen empfängt die Auswerteeinheit 14 von der Steuereinheit 12 erzeugten Maschineneinstelldaten MS und sie empfängt von der Drucksensoreinheit 13 erzeugten Sensordaten $XD(t_i)$.

Das in den Datenprozessor 14.1 geladene Computerprogramm CP veranlasst die Auswerteeinheit 14 Sensordaten $XD(t_i$, i=1...n) in den Datenprozessor 14.1 zu laden und die geladenen Sensordaten $XD(t_i)$ auszuwerten. Durch das in den Datenprozessor 14.1 geladene Computerprogramm CP ist die Auswerteeinheit 14 eingerichtet, die Sensordaten $XD(t_i$, i=1...n) in den Datenprozessor 14.1 zu laden und die geladenen Sensordaten $XD(t_i)$ auszuwerten.

Ein Auswertungsergebnis der Sensordaten $XD(t_i)$ durch die Auswerteeinheit 14 ist die graphische Darstellung der Sensordaten $XD(t_i)$. Die Sensordaten $XD(t_i$, i=1...n) bilden eine mathematische Funktion. Als mathematische Funktion lassen sich die Sensordaten $XD(t_i)$ in einem Koordinatensystem als Funktionsgraph $Y(t_i)$ darstellen. Das Koordinatensystem weist eine Ordinate und eine Abszisse auf. Die Ordinate ist der gemessene Werkzeuginnendruck P, die Abszisse sind die Zeitpunkte $t_i$, i=1...n, an denen die Sensordaten $XD(t_i)$ erzeugt worden sind. Der Funktionsgraph $Y(t_i)$ wird auch Werkzeuginnendruckkurve $Y(t_i)$ genannt.

Die graphische Darstellung der Sensordaten $XD(t_i)$ kann auf der Ausgabeeinheit 14.3 erfolgen. Vorzugsweise ist die Ausgabeeinheit 14.3 ein Bildschirm, so dass eine Bedienperson der Spritzgiessmaschine 1 von der auf dem Bildschirm dargestellten graphischen Darstellung der Sensordaten $XD(t_i)$ Kenntnis erlangt.

Fig. 2 zeigt eine graphische Darstellung der Sensordaten $XD(t_i)$. Die graphische Darstellung der Sensordaten $XD(t_i)$ erstreckt sich zeitlich von der Einspritzphase I bis zur Abkühlphase III:

- Die Einspritzphase I beginnt zu einem Zeitpunkt $t_1$ mit einem initialen Werkzeuginnendruck $P_{ini}$. Aufgrund der Position der Drucksensoreinheit 13 in der Kavität 11.1 verändert sich der initialen Werkzeuginnendruck $P_{ini}$ zu Beginn der Einspritzphase I eine Weile lang nicht und die Werkzeuginnendruckkurve $Y(t_i)$ verläuft so lange flach. Bis die Schmelze M die Position der Drucksensoreinheit 13 erreicht. Während des weiteren Füllens der Kavität 11.1 mit Schmelze M steigt der Werkzeuginnendruckkurve $Y(t_i)$ in einer kurzen Zeitspanne vom initialen Werkzeuginnendruck $P_{ini}$ auf einen maximalen Werkzeuginnendruck $P_{max}$ steil an. Der Zeitpunkt $t_{II}$, an dem die Kavität 11.1 vollständig mit Schmelze M gefüllt

ist, wird auch Füllzeitpunkt $t_{II}$ genannt. Die Einspritzphase I ist beendet und die Nachdruckphase II beginnt.

- In der Nachdruckphase II wird die Schmelze M in der Kavität 11.1 komprimiert. In der Nachdruckphase II übt die Einspritzvorrichtung 10 an der Düse 10.2 einen Nachdruck auf die Schmelze M in der Kavität 11.1 aus. Auch wird Schwindung der abkühlenden Schmelze M kompensiert, indem weitere Schmelze M in die Kavität 11.1 fliesst. Die Werkzeuginnendruckkurve $Y(t_i)$ steigt zunächst steil an und sinkt anschliessend. Die Schmelze M wird in der Kavität 11.1 zum Erstarren gebracht. Die Nachdruckphase II endet an einem Zeitpunkt $t_{III}$. Der Zeitpunkt $t_{III}$ wird auch Siegelpunkt $t_{III}$ genannt, zu dem die Schmelze M im Bereich der Düse 10.2 der Einspritzvorrichtung 10 so weit erstarrt ist, dass keine Schmelze M mehr in die Kavität 11.1 fliessen kann, die Kavität 11.1 ist versiegelt. Die Abkühlphase III beginnt.

- In der Abkühlphase III kühlt die Schmelze M in der Kavität 110 weiter ab. Die Werkzeuginnendruckkurve $Y(t_i)$ sinkt weiter. Die Abkühlphase III endet zum Zeitpunkt $t_n$ und das fertige Stückgut W wird der Kavität 11.1 entnommen.

Fig. 3 zeigt einen vergrösserten Ausschnitt der graphischen Darstellung der Sensordaten $XD(t_i)$ gemäss Fig. 2. Der Ausschnitt erstreckt sich über die gesamte Einspritzphase I und den Beginn der Nachdruckphase II.

Als mathematische Funktion lassen sich die Sensordaten $XD(t_i)$ mathematisch differenzieren. Ein Auswertungsergebnis der Sensordaten $XD(t_i)$ durch die Auswerteeinheit 14 ist die Differentiation der Sensordaten $XD(t_i)$. Die Differentiation liefert Aussagen über die Steigung, die Krümmung, usw. der Werkzeuginnendruckkurve $Y(t_i)$. Die Auswerteeinheit 14 ermittelt mindestens eine erste Ableitungsfunktion $XD'(t_i)$ der Sensordaten $XD(t_i)$. Die Auswerteeinheit 14 ermittelt mindestens eine zweite Ableitungsfunktion $XD''(t_i)$ der Sensordaten $XD(t_i)$.

Die erste Ableitungsfunktion $XD'$ ($t_i$, i=1...n) liefert eine Aussage über den Beginn des Ansteigens der Werkzeuginnendruckkurve $Y(t_i$, i=1...n). An einem Startzeitpunkt $t_I$ wechselt das Vorzeichen der ersten Ableitungsfunktion $XD'(t_I)$ von null (= 0) auf positiv (> 0) . Die bis zum Startzeitpunkt $t_I$ in der Einspritzphase I flache Werkzeuginnendruckkurve $Y(t_i)$ beginnt zu steigen. Das Ansteigen der Werkzeuginnendruckkurve $Y(t_i)$ ist weitgehend monoton, d.h. das Ansteigen der Werkzeuginnendruckkurve $Y(t_i)$ ist weitgehend konstant.

Die zweite Ableitungsfunktion $XD''(t_i)$ liefert eine Aussage über die Krümmung der Werkzeuginnendruckkurve $Y(t_i)$. Am Füllzeitpunkt $t_{II}$ wechselt das Vorzeichen der zweiten Ableitungsfunktion $XD''(t_{II})$ von null (= 0) auf positiv (> 0) . Das bis zum Erreichen des Füllzeitpunktes $t_{II}$ weitgehend konstante Ansteigen der Werkzeuginnendruckkurve $Y(t_i)$ nimmt ab dem Füllzeitpunkt $t_{II}$ zu, die Werkzeuginnendruckkurve $Y(t_i)$ ist linksgekrümmt. Am Füllzeitpunkt $t_{II}$ ist die Kavität 11.1 vollständig mit Schmelze M gefüllt und ein Fülldruck $P_{II}$ wird gemessen.

Nun genügt das Fliessverhalten der Schmelze M in der Kavität 11.1 dem Gesetz von Hagen-Poiseuille. Demnach ist der Druckanstieg $\Delta P$ der Schmelze M beim Füllen der Kavität 11.1 proportional zum Produkt aus Viskosität $\eta$ und Volumenstrom Q.

$$\Delta P = k * \eta * Q$$

Der Proportionalitätsfaktor k berücksichtigt die Geometrie der Kavität 11.1. Zum Füllzeitpunkt $t_{II}$ lässt sich die Viskosität $\eta$ der Schmelze M in der Kavität 11.1 als Viskositätskennzahl $K_\eta$ berechnen. Die Viskositätskennzahl $K_\eta$ ist proportional zur tatsächlichen, zum Füllzeitpunkt $t_{II}$ in der Kavität 11.1 herrschenden Viskosität $\eta$ der Schmelze M. Die Viskositätskennzahl $K_\eta$ ergibt sich aus dem Produkt aus Druckanstieg $\Delta P$ und Zeitdifferenz $\Delta t$ auf dem Fliessweg.

Die Viskositätskennzahl $K_\eta$ lässt sich mathematisch durch Integration der Sensordaten $XD(t_i)$ ermitteln. Ein Auswertungsergebnis der Sensordaten $XD(t_i)$ durch die Auswerteeinheit 14 ist daher die Integration der Sensordaten $XD(t_i$, i=1...n). Die Auswerteeinheit 14 ermittelt ein bestimmtes Integral $I(t_i)$ der Sensordaten $XD(t_i)$ zwischen dem Füllzeitpunkt $t_{II}$ und dem Startzeitpunkt $t_I$:

$$I(t_i) = \int_{t_I}^{t_{II}} \mathrm{XD}(t_i)\, dt_i$$

Die Viskositätskennzahl $K_\eta$ ist gleich dem bestimmten Integral $I(t_i)$. Graphisch dargestellt ist die Viskositätskennzahl $K_\eta$ der Flächeninhalt INT unterhalb der Werkzeuginnendruckkurve $Y(t_i$, i=1...n) und der Abszisse zwischen dem Füllzeitpunkt $t_{II}$ und dem Startzeitpunkt $t_I$ in Fig. 3.

Das in den Datenprozessor 14.1 geladene Computerprogramm CP veranlasst die Auswerteeinheit 14, die Sensordaten $XD(t_i)$ auszuwerten und eine Soll-Viskositätskennzahl $K_\eta$* zu ermitteln. Die Soll-Viskositätskennzahl $K_\eta$* ist proportional zu derjenigen Viskosität $\eta$, bei der die Spritzgiessmaschine 1 ein Stückgut W von hoher Qualität, ein sogenanntes Gutteil herstellt. Ob ein Stückgut W ein Gutteil ist, lässt sich durch Qualitätskontrolle wie der Erfüllung mindestens eines Qualitätsmerkmals wie das Einhalten einer vorgegebene Masshaltigkeit, das Fehlen von Trennfugen oder Gussfehlern (Short Shots), usw. bestimmen. Bei Nichterfüllung des Qualitätsmerkmals liegt ein Schlechtteil vor.

Vorzugsweise wird die Soll-Viskositätskennzahl $K_\eta$* vor dem eigentlichen Betrieb der Spritzgiessmaschine 1 in einem Testbetrieb beim Einrichten der Spritzgiessmaschine 1 ermittelt. Die Soll-Viskositätskennzahl $K_\eta^*$ wird im Datenspeicher 14.2 gespeichert.

Im Betrieb der Spritzgiessmaschine 1 wird die Viskositätskennzahl $K_\eta$ für jeden Zyklus bei der Herstellung eines Stückgutes W ermittelt. Die Ermittlung erfolgt in Echtzeit, d.h. die Ermittlung der Viskositätskennzahl $K_\eta$ eines aktuellen Zyklus ist abgeschlossen, bevor ein zeitlich direkt folgender Zyklus beginnt. Die für einen Zyklus ermittelte Viskositätskennzahl $K_\eta$ lässt sich im Datenspeicher 14.2 speichern.

Das in den Datenprozessor 14.1 geladene Computerprogramm CP veranlasst die Auswerteeinheit 14 die Soll-Viskositätskennzahl $K_\eta$* in den Datenprozessor 14.1 zu laden und die für den aktuellen Zyklus ermittelte Viskositätskennzahl $K_\eta$ mit der geladenen Soll-Viskositätskennzahl $K_\eta$* zu vergleichen. Durch das in den Datenprozessor 14.1 geladene Computerprogramm CP ist die Auswerteeinheit 14 eingerichtet, die die Soll-Viskositätskennzahl $K^*_\eta$ in den Datenprozessor 14.1 zu laden und die für den aktuellen Zyklus ermittelte Viskositätskennzahl $K_\eta$ mit der geladenen Soll-Viskositätskennzahl $K_\eta$* zu vergleichen.

Falls der Vergleich eine Übereinstimmung der für den aktuellen Zyklus ermittelten Viskositätskennzahl $K_\eta$ mit der Soll-Viskositätskennzahl $K_\eta$* ergibt, ist das im aktuellen Zyklus hergestellte Stückgut W ein Gutteil und die Auswerteeinheit 14 erzeugt eine Gutteil-Markierung GM. Das im aktuellen Zyklus hergestellte Stückgut W wird durch die Gutteil-Markierung GM als Gutteil gekennzeichnet. Die Gutteil-Markierung GM lässt sich im Datenspeicher 14.2 speichern.

Falls der Vergleich eine vordefinierte Abweichung der für den aktuellen Zyklus ermittelten Viskositätskennzahl $K_\eta$ mit der Soll-Viskositätskennzahl $K_\eta$* ergibt, ist das im aktuellen Zyklus hergestellte Stückgut W ein Schlechtteil und die Auswerteeinheit 14 erzeugt eine Schlechtteil-Markierung BM. Das im aktuellen Zyklus hergestellte Stückgut W wird durch die Schlechtteil-Markierung GM als Schlechtteil gekennzeichnet. Die Schlechtteil-Markierung BM lässt sich im Datenspeicher 14.2 speichern.

Im Datenspeicher 14.2 ist Expertenwissen zum Spritzgiessen als Expertendaten KD gespeichert. Die Expertendaten KD sind digitale Daten. Bei Abweichung der für den aktuellen Zyklus ermittelten Viskositätskennzahl $K_\eta$ mit der Soll-Viskositätskennzahl $K_\eta$* veranlasst das in den Datenprozessor 14.1 geladene Computerprogramm CP die Auswerteeinheit 14 die Expertendaten KD in den Datenprozessor 14.1 zu laden und mit dem geladenen Expertendaten KD für die im aktuellen Zyklus ermittelte Viskositätskennzahl $K_\eta$ korrigierte Maschineneinstelldaten CD zu erzeugen. Durch das in den Datenprozessor 14.1 geladene Computerprogramm CP ist die Auswerteeinheit 14 eingerichtet, die Expertendaten KD in den Datenprozessor 14.1 zu laden und mit den geladenen Expertendaten KD für die im aktuellen Zyklus ermittelte Viskositätskennzahl $K_\eta$ korrigierte Maschineneinstelldaten CD zu erzeugen.

Mit den korrigierten Maschineneinstelldaten CD wird die Abweichung der für den aktuellen Zyklus ermittelten Viskositätskennzahl $K_\eta$ mit der Soll-Viskositätskennzahl $K_\eta^*$ behoben.

Falls die Abweichung in einer vergleichsweise zu geringen Viskositätskennzahl $K_\eta$ besteht, so weisen die korrigierten Maschineneinstelldaten CD mindestens eine der folgenden Maschineneinstellgrössen S an:

- Erniedrigung der Dosiergeschwindigkeit der Schnecke 10.1,
- Erniedrigung der Einspritzgeschwindigkeit der Schmelze M,
- Erniedrigung der Temperatur der Schmelze M,
- Verkürzung des Füllzeitpunktes $t_{II}$ von der Einspritzphase I in die Nachdruckphase II.

Falls die Abweichung hingegen in einer vergleichsweise zu grossen Viskositätskennzahl $K_\eta$ besteht, so weisen die korrigierten Maschineneinstelldaten CD mindestens eine der folgenden Maschineneinstellgrössen S an:

- Erhöhung der Dosiergeschwindigkeit der Schnecke 10.1,
- Erhöhung der Einspritzgeschwindigkeit der Schmelze M,
- Erhöhung der Temperatur der Schmelze M,
- Verzögerung des Füllzeitpunktes $t_{II}$ von der Einspritzphase I in die Nachdruckphase II.

Die korrigierten Maschineneinstelldaten CD sind eine Anweisung an die Steuereinheit 12, wie die Abweichung der für den aktuellen Zyklus ermittelten Viskositätskennzahl $K_\eta$ zu beheben ist. Die korrigierten Maschineneinstelldaten CD sind digitale Daten. Über die Signalleitungen empfängt die Steuereinheit 12 die von der Auswerteeinheit 14 erzeugten korrigierten Maschineneinstelldaten CD.

Die Steuereinheit 12 ist eingerichtet, mit den korrigierten Maschineneinstelldaten CD die Abweichung der für den aktuellen Zyklus ermittelten Viskositätskennzahl $K_\eta$ zu beheben. Dazu erzeugt die Steuereinheit 12 gemäss der Anweisung der korrigierten Maschineneinstelldaten CD mindestens eine der folgenden korrigierten Maschineneinstellgrössen CS:

- eine korrigierte Dosiergeschwindigkeit der Schnecke 10.1,
- eine korrigierte Einspritzgeschwindigkeit der Schmelze M, eine korrigierte Temperatur der Schmelze M,

- ein korrigierter Füllzeitpunkt $t_{II}$ von der Einspritzphase I in die Nachdruckphase II.

Mit der korrigierten Maschineneinstellgrösse CS weist der zeitlich direkt folgende Zyklus oder ein zeitlich später folgender Zyklus eine korrigierte Viskositätskennzahl $K_\eta$' auf.

Die Überwachung des Betriebs der Spritzgiessmaschine 1 wiederholt sich für jeden Zyklus des Spritzgiessens. Somit vergleicht die Auswerteeinheit 14 die für den zeitlich direkt nachfolgenden Zyklus ermittelte korrigierte Viskositätskennzahl $K_\eta$' mit der Soll-Viskositätskennzahl $K_\eta^*$. Bei Übereinstimmung oder Abweichung werden die vorgängig am Beispiel der im aktuellen Zyklus ermittelten Viskositätskennzahl $K_\eta$ vorgenommenen Schritte der Erzeugung einer Gutteil-Markierung GM oder einer Schlechtteil-Markierung BM sowie die Erzeugung von korrigierten Maschineneinstelldaten CD wiederholt.

**Bezugszeichenliste**

| | |
|---|---|
| 1 | Spritzgiessmaschine |
| 10 | Einspritzvorrichtung |
| 10.1 | Schnecke |
| 10.2 | Düse |
| 11 | Spritzgiesswerkzeug |
| 11.1 | Kavität |
| 12 | Steuereinheit |
| 13 | Drucksensoreinheit |
| 14 | Auswerteeinheit |
| 14.1 | Datenprozessor |
| 14.2 | Datenspeicher |
| 14.3 | Ausgabeeinheit |
| 14.4 | Eingabeeinheit |
| BM | Schlechtteil-Markierung |
| CD | korrigierte Maschineneinstelldaten |
| CP | Computerprogramm |
| CS | korrigierte Maschineneinstellgrösse |
| $\Delta P$ | Druckanstieg |
| $\Delta t$ | Zeitdifferenz |
| $\eta$ | Viskosität |
| $K_\eta$ | Viskositätskennzahl |
| $K_\eta$' | korrigierte Viskositätskennzahl |
| $K_\eta$* | Soll-Viskositätskennzahl |
| GM | Gutteil-Markierung |
| i | Sensordaten-Index |
| I | Einspritzphase |
| II | Nachdruckphase |
| III | Abkühlphase |
| INT | Flächeninhalt |
| $I(t_i)$ | bestimmtes Integral |
| KD | Expertenwissen |
| M | Schmelze |
| n | Sensordaten-Zahl |
| P | Werkzeuginnendruck |
| $P_{ini}$ | initialer Werkzeuginnendruck |
| $P_{II}$ | Fülldruck |
| $P_{max}$ | maximaler Werkzeuginnendruck |
| S | Maschineneinstellgrösse |
| SD | Maschineneinstelldaten |
| t | Zeitdauer |
| $t_i$ | Zeitpunkt |
| $t_1$ | Beginn der Einspritzphase |
| $t_I$ | Startzeitpunkt |
| $t_{II}$ | Füllzeitpunkt |
| $t_{III}$ | Siegelpunkt |
| $t_n$ | Ende der Abkühlphase |
| V | Vorrichtung |
| W | Stückgut |
| $XD(t_i)$ | Sensordaten |
| $XD'(t_i)$ | erste Ableitungsfunktion |
| $XD''(t_i)$ | zweite Ableitungsfunktion |
| $Y(t_i)$ | Werkzeuginnendruckkurve |

**Patentansprüche**

1. Verfahren zur Ermittlung einer Viskositätskennzahl ($K_\eta$) einer Schmelze (M) in einem Spritzgiesswerkzeug (11); welches mindestens eine Kavität (11.1) aufweist, in welche die Schmelze (M) eingespritzt wird und die Kavität (11.1) füllt; mit einer Drucksensoreinheit (13), welche an der Kavität (11.1) angeordnet ist und einen Werkzeuginnendruck (P) der Schmelze (M) in der Kavität (11.1) misst und für den gemessenen Werkzeuginnendruck (P) Sensordaten ($XD(t_i)$) erzeugt; und mit mindestens einer Auswerteeinheit (14), welche eingerichtet ist, die Sensordaten ($XD(t_i)$) auszuwerten; welche Auswertung durch die folgenden Schritte gekennzeichnet ist:

   - dass ein Startzeitpunkt ($t_I$) ermittelt wird, an dem das Vorzeichen einer ersten Ableitungsfunktion ($XD'(t_I)$) der Sensordaten ($XD(t_i)$) von null (= 0) auf positiv (> 0) wechselt;
   - dass ein Füllzeitpunkt ($t_{II}$) ermittelt wird, an dem das Vorzeichen einer zweiten Ableitungsfunktion ($XD''(t_{II})$) der Sensordaten ($XD(t_i)$) von null (= 0) auf positiv (> 0) wechselt;
   - dass ein Druckanstieg ($\Delta P$) zwischen dem Werkzeuginnendruck ($P_{II}$) zum Füllzeitpunkt ($t_{II}$) und dem Werkzeuginnendruck ($P_{ini}$) zum Startzeitpunkt ($t_I$) gebildet wird; und
   - dass die Viskositätskennzahl ($K_\eta$) aus dem Druckanstieg ($\Delta P$) und einer Zeitdifferenz ($\Delta t$) zwischen dem Füllzeitpunkt ($t_{II}$) und dem Startzeitpunkt ($t_I$) gebildet wird.

2. Verfahren nach Anspruch 1, **dadurch gekennzeichnet, dass** die Viskositätskennzahl ($K_\eta$) aus einem bestimmten Integral ($I(t_i)$) der Sensordaten ($XD(t_i$, $i=1...n)$) zwischen dem Füllzeitpunkt ($t_{II}$) und dem Startzeitpunkt ($t_I$) gebildet wird.

**3.** Verfahren nach Anspruch 1, **dadurch gekennzeichnet, dass** die Sensordaten ($XD(t_i)$) in einem Koordinatensystem als Funktionsgraph ($Y(t_i)$) dargestellt werden, welches Koordinatensystem eine Ordinate und eine Abszisse aufweist, welche Ordinate den gemessenen Werkzeuginnendruck (P) darstellt und welche Abszisse die Zeitpunkte ($t_i$, i=1...n) der erzeugten Sensordaten ($XD(t_i)$) darstellen; und dass die Viskositätskennzahl ($K_\eta$) als den Flächeninhalt (INT) unterhalb des Funktionsgraphen ($Y(t_i)$) und der Abszisse zwischen dem Füllzeitpunkt ($t_{II}$) und dem Startzeitpunkt ($t_I$) gebildet wird.

**4.** Verfahren nach einem der Ansprüche 1 bis 3, **dadurch gekennzeichnet, dass** das Spritzgiesswerkzeug (11) Bestandteil einer Spritzgiessmaschine (1) zur Herstellung mindestens eines Stückgutes (W) ist, wobei die Auswerteeinheit (14) eingerichtet ist, die Sensordaten ($XD(t_i)$) auszuwerten und eine Soll-Viskositätskennzahl ($K_\eta$*) zu ermitteln, bei der die Spritzgiessmaschine (1) ein Stückgut (W) von hoher Qualität, ein sogenanntes Gutteil herstellt.

**5.** Verfahren nach Anspruch 4, **dadurch gekennzeichnet, dass** die Herstellung des Stückgutes (W) ein zyklischer Prozess ist, bei dem die Spritzgiessmaschine (1) in sich zeitlich wiederholenden Zyklen immer wieder ein Stückgut (W) herstellt, wobei die Auswerteeinheit (14) eingerichtet ist, die für einen aktuellen Zyklus ermittelte Viskositätskennzahl ($K_\eta$) mit der Soll-Viskositätskennzahl ($K_\eta$*) zu vergleichen; dass falls der Vergleich eine Übereinstimmung der für den aktuellen Zyklus ermittelten Viskositätskennzahl ($K_\eta$) mit der Soll-Viskositätskennzahl ($K_\eta$*) ergibt, das im aktuellen Zyklus hergestellte Stückgut (W) ein Gutteil ist und eine Gutteil-Markierung (GM) erzeugt wird; und dass falls der Vergleich eine Abweichung der für den aktuellen Zyklus ermittelten Viskositätskennzahl ($K_\eta$) mit der Soll-Viskositätskennzahl ($K_\eta$*) ergibt, das im aktuellen Zyklus hergestellte Stückgut (W) ein Schlechtteil ist und eine Schlechtteil-Markierung (BM) erzeugt wird.

**6.** Verfahren nach Anspruch 5, **dadurch gekennzeichnet, dass** falls der Vergleich eine Abweichung der für den aktuellen Zyklus ermittelten Viskositätskennzahl ($K_\eta$) mit der Soll-Viskositätskennzahl ($K_\eta$*) ergibt, mit Expertendaten (KD) für die im aktuellen Zyklus ermittelte Viskositätskennzahl ($K_\eta$) korrigierte Maschineneinstelldaten (CD) erzeugt werden.

**7.** Verfahren nach Anspruch 6, **dadurch gekennzeichnet, dass** die Spritzgiessmaschine (1) mindestens eine Steuereinheit (12) aufweist, welche eingerichtet ist, die Herstellung des Stückgutes (W) über mindestens eine Maschineneinstellgrösse (S) zu steuern und welche eingerichtet ist, gemäss der Anweisung der korrigierten Maschineneinstelldaten (CD) die Herstellung des Stückgutes (W) über mindestens eine korrigierte Maschineneinstellgrösse (CS) die Abweichung der für den aktuellen Zyklus ermittelten Viskosität ($\eta$) zu beheben.

**8.** Vorrichtung (V) zur Ermittlung einer Viskositätskennzahl ($K_\eta$) einer Schmelze (M) in einem Spritzgiesswerkzeug (11), welche Vorrichtung (V) neben dem Spritzgiesswerkzeug (11) auch eine Drucksensoreinheit (13) und mindestens eine Auswerteeinheit (14) aufweist; welches Sitzgiesswerkzeug (11) mindestens eine Kavität (11.1) aufweist, in welche die Schmelze (M) einspritzbar ist wird und welche Kavität (11.1) mit eingespritzter Schmelze (M) füllbar ist; welche Drucksensoreinheit (13) an der Kavität (11.1) angeordnet ist und einen Werkzeuginnendruck (P) der eingespritzten Schmelze (M) in der Kavität (11.1) misst und für den gemessenen Werkzeuginnendruck (P) Sensordaten ($XD(t_i)$ erzeugt; welche Auswerteeinheit (14) eingerichtet ist, die Sensordaten ($XD(t_i)$ auszuwerten; welche Auswertung **dadurch gekennzeichnet ist**:

- **dass** die Auswerteeinheit (14) einen Startzeitpunkt ($t_I$) ermittelt, an dem das Vorzeichen einer ersten Ableitungsfunktion ($XD'(t_I)$) der Sensordaten ($XD(t_i)$) von null (= 0) auf positiv (> 0) wechselt;
- **dass** die Auswerteeinheit (14) einen Füllzeitpunkt ($t_{II}$) ermittelt, an dem das Vorzeichen einer zweiten Ableitungsfunktion ($XD''(t_{II})$) der Sensordaten ($XD(t_i$, i=1...n)) von null (= 0) auf positiv (> 0) wechselt;
- **dass** die Auswerteeinheit (14) einen Druckanstieg ($\Delta P$) zwischen dem Werkzeuginnendruck ($P_{II}$) zum Füllzeitpunkt ($t_{II}$) und dem Werkzeuginnendruck ($P_{ini}$) zum Startzeitpunkt ($t_I$) bildet; und
- **dass** die Auswerteeinheit (14) die Viskositätskennzahl ($K_\eta$) aus dem Druckanstieg ($\Delta P$) und Zeitdifferenz ($\Delta t$) zwischen dem Füllzeitpunkt ($t_{II}$) und dem Startzeitpunkt ($t_I$) bildet.

**9.** Vorrichtung (V) nach Anspruch 8, **dadurch gekennzeichnet, dass** die Auswerteeinheit (14) die Viskositätskennzahl ($K_\eta$) aus dem bestimmten Integral ($I(t_i)$) der Sensordaten ($XD(t_i)$) zwischen dem Füllzeitpunkt ($t_{II}$) und dem Startzeitpunkt ($t_I$) bildet.

**10.** Vorrichtung (V) nach Anspruch 8, **dadurch gekennzeichnet, dass** die Auswerteeinheit (14) die Sensordaten ($XD(t_i)$) in einem Koordinatensystem als Funktionsgraph ($Y(t_i)$) darstellt, welches Koordinatensystem eine Ordinate und eine Abszisse aufweist, welche Ordinate den gemessenen Werkzeuginnendruck (P) darstellt und welche Abszisse die

Zeitpunkte ($t_i$, i=1...n) der erzeugten Sensordaten ($XD(t_i)$) darstellen; und dass die Auswerteeinheit (14) die Viskositätskennzahl ($K_\eta$) als den Flächeninhalt (INT) unterhalb des Funktionsgraphen ($Y(t_i)$) und der Abszisse zwischen dem Füllzeitpunkt ($t_{II}$) und dem Startzeitpunkt ($t_I$) bildet.

**11.** Vorrichtung (V) nach Anspruch 8, **dadurch gekennzeichnet, dass** das Spritzgiesswerkzeug (11) Bestandteil einer Spritzgiessmaschine (1) zur Herstellung mindestens eines Stückgutes (W) ist; dass die Auswerteeinheit (14) eingerichtet ist, die Sensordaten ($XD(t_i)$) auszuwerten und eine Soll-Viskositätskennzahl ($K_\eta$*) zu ermitteln, bei der die Spritzgiessmaschine (1) ein Stückgut (W) von hoher Qualität, ein sogenanntes Gutteil herstellt.

**12.** Vorrichtung (V) nach Anspruch 11, **dadurch gekennzeichnet, dass** die Auswerteeinheit (14) eingerichtet ist, die für einen aktuellen Zyklus ermittelte Viskositätskennzahl ($K_\eta$) mit der Soll-Viskositätskennzahl ($K_\eta$*) zu vergleichen; dass falls der Vergleich eine Übereinstimmung der für den aktuellen Zyklus ermittelten Viskositätskennzahl ($K_\eta$) mit der Soll-Viskositätskennzahl ($K_\eta$*) ergibt, das im aktuellen Zyklus hergestellte Stückgut (W) ein Gutteil ist, die Auswerteeinheit (14) eine Gutteil-Markierung (GM) erzeugt; und dass falls der Vergleich eine Abweichung der für den aktuellen Zyklus ermittelten Viskositätskennzahl ($K_\eta$) mit der Soll-Viskositätskennzahl ($K_\eta$*) ergibt, das im aktuellen Zyklus hergestellte Stückgut (W) ein Schlechtteil ist, die Auswerteeinheit (14) eine Schlechtteil-Markierung (BM) erzeugt.

**13.** Vorrichtung (V) nach Anspruch 12, **dadurch gekennzeichnet, dass** falls der Vergleich eine vordefinierte Abweichung der für den aktuellen Zyklus ermittelten Viskositätskennzahl ($K_\eta$) mit der Soll-Viskositätskennzahl ($K_\eta$*) ergibt, die Auswerteeinheit (14) mit Expertendaten (KD) für die im aktuellen Zyklus ermittelte Viskositätskennzahl ($K_\eta$) korrigierte Maschineneinstelldaten (CD) erzeugt.

**14.** Vorrichtung (V) nach Anspruch 13, **dadurch gekennzeichnet, dass** falls die Abweichung in einer vergleichsweise zu geringen Viskositätskennzahl ($K_\eta$) besteht, die korrigierten Maschineneinstelldaten (CD) mindestens eine der folgenden Maschineneinstellgrössen (S) anweisen:

- Erniedrigung einer Dosiergeschwindigkeit einer Schnecke (10.1),
- Erniedrigung einer Einspritzgeschwindigkeit der Schmelze (M),
- Erniedrigung einer Temperatur der Schmelze (M),
- Verkürzung des Füllzeitpunktes ($t_{II}$) von einer Einspritzphase (I) in eine Nachdruckphase (II);

oder dass falls die Abweichung in einer vergleichsweise zu grossen Viskositätskennzahl ($K_\eta$) besteht, die korrigierten Maschineneinstelldaten (CD) mindestens eine der folgenden Maschineneinstellgrössen (S) anweisen:

- Erhöhung einer Dosiergeschwindigkeit einer Schnecke (10.1),
- Erhöhung einer Einspritzgeschwindigkeit der Schmelze (M),
- Erhöhung einer Temperatur der Schmelze (M)
- Verzögerung des Füllzeitpunktes ($t_{II}$) von einer Einspritzphase (I) in eine Nachdruckphase (II).

**15.** Vorrichtung (V) nach einem der Ansprüche 13 oder 14, **dadurch gekennzeichnet, dass** die Spritzgiessmaschine (1) mindestens eine Steuereinheit (12) aufweist, welche eingerichtet ist, die Herstellung des Stückgutes (W) über mindestens eine der folgenden Maschineneinstellgrössen (S) zu steuern:

- eine Dosiergeschwindigkeit einer Schnecke (10.1),
- eine Einspritzgeschwindigkeit der Schmelze (M),
- eine Temperatur der Schmelze (M),
- ein Füllzeitpunkt ($t_{II}$) von einer Einspritzphase (I) in eine Nachdruckphase (II),

und welche eingerichtet ist, gemäss der Anweisung der korrigierten Maschineneinstelldaten (CD) die Herstellung des Stückgutes (W) über mindestens eine der folgenden korrigierten Maschineneinstellgrössen (CS) die Abweichung der für den aktuellen Zyklus ermittelten Viskositätskennzahl ($K_\eta$) zu beheben:

- eine korrigierte Dosiergeschwindigkeit einer Schnecke (10.1),
- eine korrigierte Einspritzgeschwindigkeit der Schmelze (M),
- eine korrigierte Temperatur der Schmelze (M),
- ein korrigierter Füllzeitpunkt ($t_{II}$) von einer Einspritzphase (I) in eine Nachdruckphase (II).

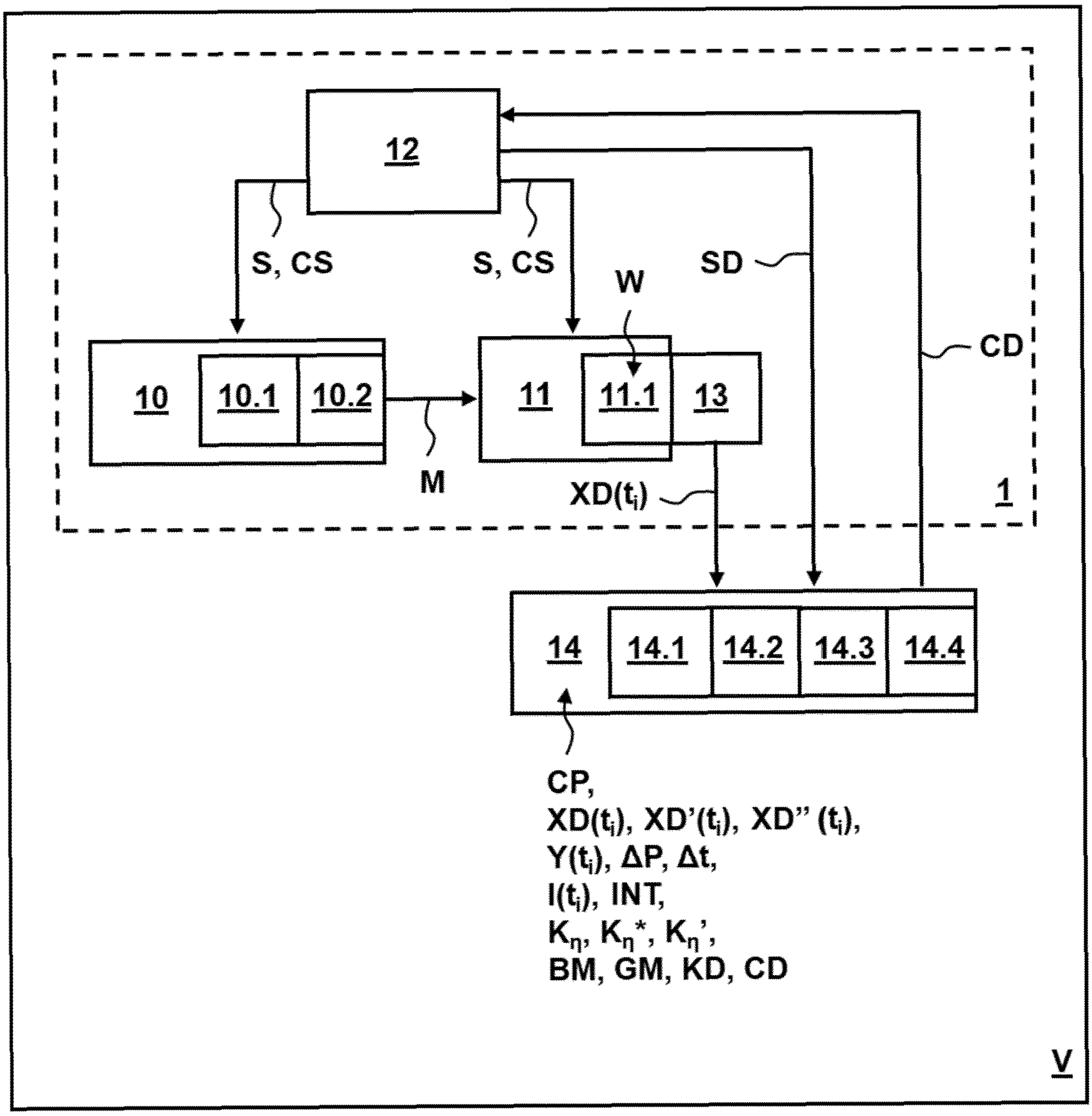
12
S, CS
S, CS
W
SD
CD
10
10.1
10.2
11
11.1
13
M
XD(t_i)
1
14
14.1
14.2
14.3
14.4
CP,
XD(t_i), XD'(t_i), XD'' (t_i),
Y(t_i), ΔP, Δt,
I(t_i), INT,
K_η, K_η*, K_η',
BM, GM, KD, CD
V

Fig. 1

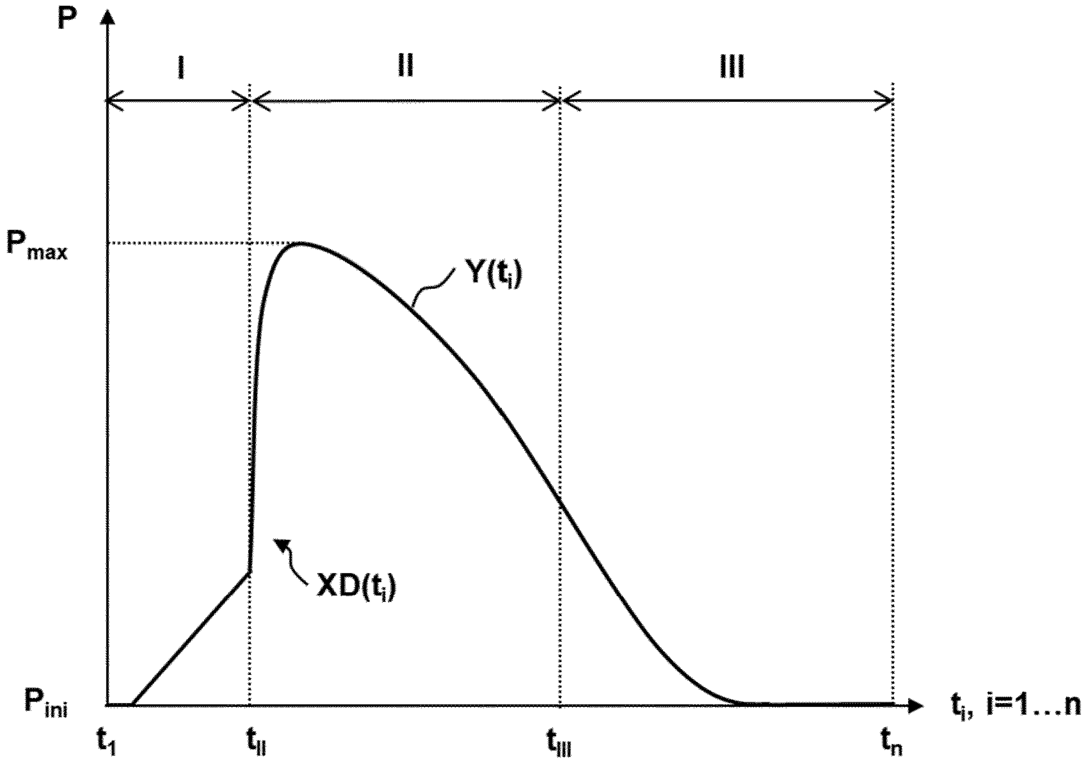
P
I
II
III
Pmax
Y(ti)
XD(ti)
Pini
ti, i=1…n
t1
tII
tIII
tn

Fig. 2

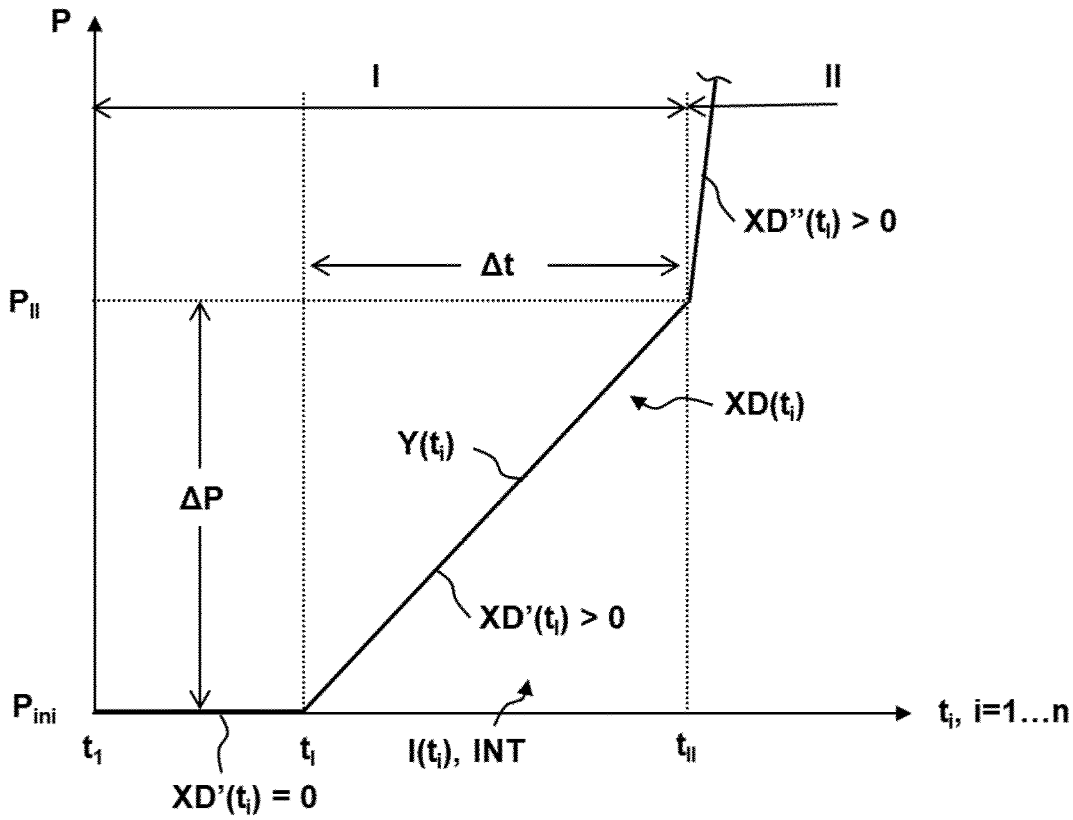
P
I
II
XD''(ti) > 0
Δt
PII
XD(ti)
Y(ti)
ΔP
XD'(ti) > 0
Pini
ti, i=1…n
t1
tI
I(ti), INT
tII
XD'(ti) = 0

Fig. 3

Europäisches Patentamt
European Patent Office
Office européen des brevets

# EUROPÄISCHER RECHERCHENBERICHT

Nummer der Anmeldung
EP 25 15 1798

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Schiffers Reinhard: "Verbesserung der Prozessfähigkeit beim Spritzgießen durch Nutzung von Prozessdaten und eine neuartige Schneckenhubführung", Dissertation Universität Duisburg-Essen, 6. Juli 2009 (2009-07-06), XP093178645, Gefunden im Internet: URL:https://duepublico2.uni-due.de/servlets/MCRFileNodeServlet/duepublico_derivate_00022675/Schiffers_Diss.pdf [gefunden am 2024-06-24] * Kapitel 2.2.3, 2.3.3, 3.2.5 * | 1-15 | INV. B29C45/00 B29C45/76 B29C45/77 |
| Y | DE 41 40 392 C2 (BOSCH GMBH ROBERT [DE]) 20. Februar 1997 (1997-02-20) * Anspruch 1-3; Spalte 4, Z. 36-39; Fig. 1, 2 * | 1-15 | |
| Y | DE 10 2005 032367 A1 (PRIAMUS SYSTEM TECHNOLOGIES AG [CH]) 11. Januar 2007 (2007-01-11) * Para. [0013] * | 1-15 | |

| RECHERCHIERTE SACHGEBIETE (IPC) |
|---|
| B29C |

Der vorliegende Recherchenbericht wurde für alle Patentansprüche erstellt

1

| Recherchenort | Abschlußdatum der Recherche | Prüfer |
|---|---|---|
| München | 6. Mai 2025 | Härtig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 15 1798

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2025

| Im Recherchenbericht angeführtes Patentdokument | Datum der Veröffentlichung | Mitglied(er) der Patentfamilie | Datum der Veröffentlichung |
|---|---|---|---|
| DE 4140392 C2 | 20-02-1997 | AT 403328 B | 26-01-1998 |
| | | DE 4140392 A1 | 09-06-1993 |
| | | FR 2684592 A1 | 11-06-1993 |
| | | JP H05253984 A | 05-10-1993 |
| DE 102005032367 A1 | 11-01-2007 | DE 102005032367 A1 | 11-01-2007 |
| | | EP 1912774 A1 | 23-04-2008 |
| | | JP 2009500197 A | 08-01-2009 |
| | | KR 20080037652 A | 30-04-2008 |
| | | US 2009278274 A1 | 12-11-2009 |
| | | WO 2007006496 A1 | 18-01-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009040077 A1